(19)

Europäisches
Patentamt
European
Patent Office
Office européen
des brevets

(11) **EP 3 826 253 A1**

(12) **EUROPEAN PATENT APPLICATION**

(43) Date of publication:
**26.05.2021 Bulletin 2021/21**

(51) Int Cl.:
**H04L 27/26** *(2006.01)*

(21) Application number: **19210035.2**

(22) Date of filing: **19.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Volkswagen AG**
**38440 Wolfsburg (DE)**

(72) Inventors:
- **Pfadler, Andreas**
  **13359 Berlin (DE)**
- **Jornod, Guillaume**
  **10245 Berlin (DE)**

(54) **OTFS EMBEDDED PILOT ESTIMATION EXTENSION**

(57)     The invention relates to the OTFS coded transmission of data. In order to improve the bit error rate (BER) for transmission of OTFS-coded signals that are processed on the basis of integer Doppler shifts, the guard interval is expanded over the complete Doppler dimension or alternatively the guard interval extends over the complete delay dimension of the OTFS-coded frame in situations of either large Doppler shifts or large delays, especially as the quadruple of the Doppler shifts approaches or exceeds the extension of the Doppler domain in the OTFS frame or twice the delay delays approach or exceeds the extension of the delay domain in the OTFS frame.

Tx symbols: □: pilot symbol; ○: guard symbol; ×: data symbol

FIG. 2a

EP 3 826 253 A1

**Description**

The present invention relates to the field of encoding information being transmitted on wireless communication lines. Especially this disclosure relates to the processing in connection with the newly suggested orthogonal time frequency space (OTFS) modulation with embedded pilot-aided channel estimation in the delay-Doppler domain. Specifically the invention is related to a method for channel estimation and reduction of the bit error rate (BER).

The newly proposed OTFS modulation exhibits significant advantages over OFDM modulation currently used in the 4G standard long term evolution (LTE) mobile systems in multipath delay-Doppler channels where each path exhibits a different delay and Doppler shift. The delay-Doppler domain provides an alternative representation of a time-varying channel geometry due to moving objects (e.g. transmitters, receivers, or reflectors) in the scene. Leveraging on this presentation, OTFS multiplexes each information symbol over two-dimensional (2D) orthogonal basis functions, specifically designated to combat the dynamics of time-varying multipath channels. Then the information symbols placed in the delay-Doppler coordinate system or grid can be converted to the standard time-frequency domain used by the traditional modulation schemes such as OFDM. This conversion between the time-frequency domain and the delay-Doppler domain is performed by a two-dimensional Fourier transform. For example, an inverse symplectic finite Fourier transform (ISFFT) is used in modulation. Consequently, a symplectic finite Fourier transform (SFFT) is used for demodulation, i.e. to transform a time-frequency grid into a delay-Doppler grid.

In a communication using the OTFS modulation symbols are arranged in a two-dimensional grid. In this delay-Doppler domain grid one dimension is associated with a delay of signals due to different transmission paths (delay domain) and the other dimension is associated with the Doppler frequency shift (Doppler domain) occurring during transmission. Thus the delay domain dimension is a time-like dimension in the delay-Doppler domain and the Doppler domain dimension is a frequency-like dimension in the delay-Doppler domain. Symbols associated with the information to be transmitted are arranged in this delay-Doppler grid. Each grid is associated with a frame. These frames are sequentially transmitted. The actual transmission takes place in a time domain we are used to in actual life. For the sake of clarity in this specification the time-like dimension in the delay-Doppler domain is always called delay dimension and the frequency-like dimension in the delay-Doppler domain Doppler dimension, respectively. The terms time dimension and frequency dimension are thus used only to describe the actual living environment, in which the frame are transmitted sequentially, each in a certain transmission time using different frequency carriers. Thus the time dimension is the dimension in which we measure time and the frequency dimension is that dimension, in which we differentiate frequencies of transmission carriers.

In a multipath delay-Doppler scene it is necessary to know the channel impulse response (CIR) in order to be able to perform OTFS channel detection or equalization of the channels. Thus a single pilot signal, which is associated with the pilot symbol, is placed in the grid and surrounded by guard symbols in the delay-Doppler domain grid. Guard symbols do not carry any energy. According to the state of the art, the number of guard symbols is chosen according to the expected maximum delay occurring in any one of the communication paths and the maximum expected Doppler frequency shifts occurring due to the relative movement of the transmitter and receiver and/or reflectors.

In the state of the art in the delay domain the pilot symbol is guarded in each direction up to the absolute amount of the maximum expected delay.

The Doppler frequency shift (in short also called; Doppler shift) can be positive as well as negative depending on whether receiver and/or transmitter and/or reflector are closing in on each other or separate from each other. Therefore, the pilot symbol has to be guarded on each side parallel to the Doppler dimension by guard symbols spanning twice the absolute value of the maximum Doppler frequency shift occurring in one of the paths. Thus in a delay-Doppler grid with N Doppler grid positions and M delay grid positions $4(4k_v + 1)(2l_\tau + 1)$ grid spaces around the pilot (actually minus the pilot grid space itself) are used for guard symbols. A pilot symbol is placed at $(k_p, l_p)$, where $k_p$ is associated with the Doppler dimension position or tap and $l_p$ is associated with the delay domain position or tap. Thus the guard symbols are placed at $(k_g, l_g)$ with $k_P - 2k_v \leq k_g \leq k_P + 2k_v$, and
$l_P - l_\tau \leq l_g \leq l_p + 2l_\tau$ where $k_v$ corresponds to the maximum (expected) Doppler shift and $l_\tau$ corresponds to the maximum (expected) delay occurring in any of the transmission paths. Guard symbols do not carry any intensity, i.e. are null-symbols.

The data symbols are placed outside the guard interval occupied by the guard symbols surrounding the pilot symbol. Under ideal condition this arrangement enables the detection of the channel impulse response. Parts of the energy or intensity of the pilot symbol are "transferred" or "moved" to guard symbol locations in the delay-Doppler domain grid due to the Doppler frequency shifts occurring in the different paths as well as the different delays of the different paths. Thus by evaluating the symbol intensities for the pilot symbol position and parts of the guard symbol positions in the received delay-Doppler domain grid the channel impulse response can be derived. The channel analysis of this energy transfer to the different grid positions in the received OTFS grid (frame) yields the so-called channel impulse response (CIR). The process to establish this CIR is called channel estimation.

This channel impulse response can then be used to equalize the intensities detected in the different delay-Doppler domain grid positions. This is based on the well-established assumption that all symbols in an delay-Doppler domain grid are affected in the same way by the different path, i.e. show the same channel impulse response. It is thus sufficient to determine the channel impulse response for one transmitted symbol, which is the pilot symbol. This is described in more detail by P. Ravieteja, Khao T. Phan and Yi Hong in "Embedded Pilot-Aided Channel Estimation for OTFS in Delay-Doppler Channels", arXiv preprint arXiv:1808.08360 (2018).

The guard interval has to have a size such that none of the pilot symbol intensity will be transferred to data symbol grid space and at the same time that no data symbol intensity will be transferred to guard space positions to which the pilot symbol intensity could be transferred to during transmission. Thus the dimensions of the guard interval, i.e. the number of guard symbols needed, is dependent on the expected maximum delay occurring in any one of the paths and the expected maximum Doppler frequency shift occurring in any one of the paths.

When processing the received frame accepting integer Doppler shifts only the resulting error bit rate it not optimal in cases where there are large delays or large Doppler shifts occurring.

It is an object of the invention to improve on the error bit rate in these situations for OTFS coded transmissions.

This objective is achieved by a method according to claim 1. Further preferable embodiments are disclosed in the dependent claims.

The invention proposes to introduce a guard interval to span either the complete Doppler domain, when large Doppler shifts occur, or to span the complete delay domain, when large delays occur. Even though this might reduce the data bandwidth of the transmission the reduction in the error bit rate can compensate this in many cases.

The invention thus provides a method to improve the bit rate error for transmission of OTFS-coded signals that are processed on the basis of integer Doppler shifts where the guard interval is expands over the complete Doppler dimension or alternatively the guard interval extends over the complete delay dimension. This has the advantage that in one dimension the no data symbol intensity can be transferred to guard spaces in the received frame due to the respective major effect, the Doppler shift, when the guard interval extends the complete Doppler domain, or the delay, when the delay domain extends the complete delay domain.

The invention is based on the finding that in cases where there are either very large Doppler shift, where the quadruple of the maximum expected Doppler shift is close or exceeds the extension of the Doppler domain of the OTFS-delay-Doppler frame used for transmission the guard interval can be expanded to cover the complete Doppler domain in the case where integer Doppler shifts are considered only. Likewise the guard interval can be expanded to use the complete delay domain in case the twice the maximum expected delay comes close or exceeds the delay domain in the transmitted OTFS-delay-Doppler fame. These extensions of the guard interval are beneficial in cases also, where either the Doppler shift occurring during transmission sometimes or regularly well exceed the maximum estimated Doppler shift or the delay occurring transmission sometimes or regularly well exceed the maximum estimated delay. It is understood and appreciated by the person skilled in the art that the guard interval can be extended in one dimension only. This is possible for the Doppler domain as long as twice the maximum occurring Doppler shift does not exceed the Doppler dimension in the transmitted OTFS-delay-Doppler fame. For the delay dimension this holds true until the maximum occurring delay exceed the delay dimension in the transmitted OTFS-delay-Doppler fame. Thus transmitted OTFS-delay-Doppler fame can be used in worse conditions than expected before. In these cases the channel estimation can take into account all grid spaces in respect to the one dimension that is completely spanned by the guard interval.

According to the prior art during channel estimation the path indicators $b[k,l]$ and gain factors $\hat{h}[[k-k_p]_N, [l-l_p]_M]$ are determined only for Doppler taps k between and including the pilot-minus-maximum-expected-Doppler-shift $k_p-k_v$ and the pilot-plus-maximum-expected-Doppler-shift $k_p+k_v$, k with $k_p-k_v \leq k \leq k_p+k_v$ and only for the delay domain taps l between and including the pilot delay tap $l_p$ and the pilot-plus-maximum-expected-delay tap $l_p+l_\tau$, l with $l_p \leq l \leq l_p+l_\tau$, if the received sample $y[k,l]$ is greater or equal to a threshold T, $y[k,l] \geq T$. In these cases the path indicator $b[[k-k_p]_N, [l-l_p]_M]$ is set to 1, $b[[k-k_p]_N, [l-l_p]_M] = 1$ as well as the respective gain factor $\hat{h}[[k-k_p]_N, [l-l_p]_M]$ is set to the received

$$\hat{h}\left[\left[k - k_p\right]_N, \left[l - l_p\right]_M\right] = \frac{y[k,l]}{x_p},$$

sample amplitude $y[k,l]$ divided by the pilot power $x_p$, wherein $[\cdot]_N$ denotes a modulo N operator and $[\cdot]_M$ denotes a modulo M operator.

Compared to the suggested schemas of the prior art it is proposed that all guard interval positions with respect to one delay-Doppler dimension in the received OTFS-delay-Doppler frame are evaluated in the channel estimation process.

By this the channel estimation can be enhanced drastically. Especially in cases where the quadruple of the occurring Doppler shift approaches the extension of the Doppler dimension of the transmitted OTFS delay-Doppler frame or twice the occurring delay approaches the extension of the delay dimension of the transmitted OTFS delay-Doppler frame.

A major improvement, i.e. reduction, on the bit error rate is thus achieved by improving the channel estimation in these situation. Therefore, in one embodiment the method further comprises a channel estimation for transmitted OTFS-frames with an embedded pilot taking into account integer Doppler shifts, wherein the channel estimation comprises:

receiving delay-Doppler-domain samples y[k,l] of a received OTFS delay-Doppler frame, associated with a delay-Doppler grid, wherein the grid hat N grid spaces associated with a Doppler dimension quantized in $\frac{1}{NT}$ and M grid spaces in the delay dimension quantized in $\frac{1}{M \cdot \Delta f}$, wherein M an N are integers, wherein the delay-Doppler domain samples y[k,l] are derived by a two-dimensional Fourier transformation of time-frequency domain samples Y[n,m] resulting from sampling a time-varying received OFTS coded signal N times with a sampling time T and for M frequency subcarriers with a bandwidth resolution of $\Delta f$;

determining path gains h[k,l] and path indicators b[k-$k_p$,l-$l_p$] for at least some of the grid positions in the received OTFS delay-Doppler frame from received delay-Doppler domain samples y[k,l] of grid positions in a guard interval surrounding the original pilot grid position [$k_p$,$l_p$], where $k_p$ is the index of the pilot's grid position in the Doppler dimension and $l_p$ is the index of the pilot's grid position in the delay dimension;

wherein,

when the guard interval extends over the complete Doppler dimension, for all Doppler domain taps k, k with $0 \leq k \leq N-1$, and the delay domain taps I between and including the pilot delay tap $l_p$ and the pilot-plus-maximum-expected-delay tap $l_p$+$l_\tau$, I with $l_p \leq l \leq l_p$+$l_\tau$, if the received sample y[k,l] is greater or equal to a threshold T, y[k,l] $\geq$ T, a path indicator $b[[k-k_p]_N, [l-l_p]_M]$ is set to 1 as well as the respective gain factor $\hat{h}[[k-k_p]_N, [l-l_p]_M]$ is set to the received sample amplitude y[k,l] divided by the pilot power $x_p$,

$$\hat{h}\left[\left[k - k_p\right]_N, \left[l - l_p\right]_M\right] = \frac{y[k,l]}{x_p},$$ wherein $[\cdot]_N$ denotes a modulo N operator and $[\cdot]_M$ denotes a modulo M operator and;

or when

the guard interval extends over the complete delay dimension, for all Doppler taps k between and including the pilot-minus-maximum-expected-Doppler-shift $k_p$-$k_v$ and the pilot-plus-maximum-expected-Doppler-shift $k_p$+$k_v$, i.e. k with $k_p$-$k_v \leq k \leq k_p$+$k_v$, and all delay taps I, $0 \leq l \leq M-1$, , if the received sample y[k,l] is greater or equal to a threshold T, y[k,l] $\geq$ T, a path indicator $b[[k-k_p]_N,[l-l_p]_M]$ is set to 1 as well as the respective gain factor $\hat{h}[[k-k_p]_N,[l-l_p]_M]$ is set to the received sample amplitude y[k,l] divided by the pilot power $x_p$,

$$\hat{h}\left[\left[k - k_p\right]_N, \left[l - l_p\right]_M\right] = \frac{y[k,l]}{x_p},$$ wherein $[\cdot]_N$ denotes a modulo N operator and $[\cdot]_M$ denotes a modulo M operator.

Further the increased number of gain values and path indicators determined is also used in the deduction of the transmitted data by considering all contributions from all grid spaces that are evaluated for the channel estimation.

Thus, the deduction of the transmitted data can be improved. Without undue extra effort, when the guard interval extends over the complete Doppler dimension, the transmitted data are deduced from the set of equations taking into account all path indicators b[k,l] and all gain factors h[k,l] for all possible Doppler taps $0 \leq k \leq N-1$ and the delay taps I between and including the pilot delay tap $l_p$ and the pilot-plus-maximum-expected-delay tap $l_p$+$l_\tau$, I with $l_p \leq l \leq l_p$+$l_\tau$ :

$$y[k,l] = \sum_{k'=0}^{N-1}\sum_{l'=0}^{l_\tau} b[k',l']\hat{h}[k',l']x_d[[k-k']_N, [l-l']_M],$$ and,

when the guard interval extends over the complete delay dimension, the transmitted data are deduced from the set of equations taking into account all path indicators b[k,l] and all gain factors h[k,l] for all Doppler taps k between and including the pilot-minus-maximum-expected-Doppler-shift $k_p$-$k_v$ and the pilot-plus-maximum-expected-Doppler-shift $k_p$+$k_v$, k with $k_p$-$k_v \leq k \leq k_p$+$k_v$ and all delay taps I, $0 \leq l \leq M-1$,

$$y[k,l] = \sum_{k'=k_p-k_v}^{k_p+k_v}\sum_{l'=0}^{M-1} b[k',l']\hat{h}[k',l']x_d[[k-k']_N, [l-l']_M] .$$

In contrast, according to the state of the art the transmitted data are deduced from the "reduced" set of equations taking into account only path indicators b[k,l] and gain factors h[k,l] for possible Doppler taps k between and including the pilot-minus-maximum-expected-Doppler-shift $k_p$-$k_v$ and the pilot-plus-maximum-expected-Doppler-shift $k_p$+$k_v$, k with $k_p$-$k_v \leq k \leq k_p$+$k_v$ and the delay domain taps l between and including the pilot delay tap $l_p$ and the pilot-plus-maximum-expected-delay tap $l_p$+$l_\tau$, l with $l_p \leq l \leq l_p$+$l_\tau$ :

$$y[y,k] = \sum_{k'=k_p-k_v}^{k_p+k_v} \sum_{l'=0}^{l_\tau} b[k',l']\hat{h}[k',l']x_d[[k-k']_N,[l-l']_M].$$

To advance the evaluation of the transmitted data a white noise component can be added. Thus in some embodiments an additive term v[k,l] representing white noise is taken into account in the respective sets of equations to deduce the transmitted data.

The method can be implemented in a device being configured to carry out the respective channel estimation and data deduction. This could for example be a programmable unit comprising memory for holding the instruction statements and a processing unit to perform the necessary evaluations and calculations according to the instruction stored in the memory.

Further details of the invention will be disclosed in connection with a drawing.

Fig. 1a     a schematic example of an OTFS transmission frame in the form of a delay-Doppler domain grid (state of the art);

Fig 1b     a schematic example of a received OTFS frame in the form of a delay-Doppler domain grid corresponding to the transmitted frame of fig. 1a indicating the grid positions used for channel estimation and data detection (state of the art);

Fig. 2a     a schematic example of an OTFS transmission frame in the form of a delay-Doppler domain grid with guard symbol extending along the complete Doppler dimension;

Fig. 2b     a schematic example of a received OTFS frame in the form of a delay-Doppler domain grid corresponding to the transmitted frame of fig. 2a indicating the grid positions used for channel estimation and data detection;

Fig. 3a     schematic example of an OTFS transmission frame in the form of a delay-Doppler domain grid with guard symbol extending along the complete delay dimension;

Fig. 3b     a schematic example of a received OTFS frame in the form of a delay-Doppler domain grid corresponding to the transmitted frame of fig. 3a indicating the grid positions used for channel estimation and data detection;

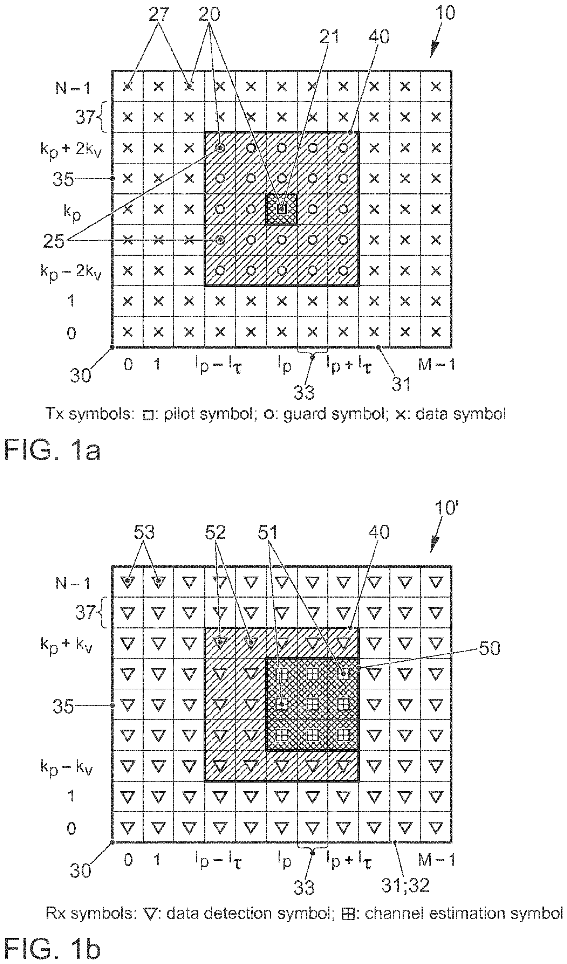

Fig. 1a shows a graphic representation of an OTFS transmission frame 10 according to the state of the art comprising symbols 20 to be transmitted. The OTFS transmission frame 10 depicts a two dimensional grid 30 in the delayed-Doppler domain. One dimension, the abscissa, is associated with a delay basis 31. This dimension is also associated with the delay occurring during transmission. The other dimension, the ordinate, is associated with a Doppler (shift) basis 35. This dimension is also associated with the Doppler frequency shift occurring during transmission.

Along the delay dimension the delay-Doppler grid 30 is divided into M discrete delay intervals or taps 33. Accordingly along the Doppler dimension 36 the delay-Doppler grid 30 is divided into N Doppler (frequency shift) intervals or taps 37.

The transmitter symbols 20 arranged in the delay-Doppler domain grid 30 comprise a pilot symbol 21, depicted by the square. During transmission the energy of the pilot symbol 21 is usually partly transferred to other grid positions in the grid 30 of the received delay-Doppler frame 10' (confer to fig. 1b). Usually the transmitted signal reaches the receiver via multiple different paths. This leads to different delays for the transmitted pilot symbol. In addition different Doppler frequency shifts occur due to the relative motion of the receiver and/or the transmitter and/or reflectors in the different paths. The channel analysis of this energy transfer to the different grid positions in the received OTFS grid (frame) yields the so-called channel impulse response (CIR). The process to establish this CIR is called channel estimation.

It is a very good assumption that all symbols in a received delay-Doppler frame (or corresponding grid) are affected by the transmission in a similar fashion. Thus the channel impulse response should be equal for all symbols transmitted regardless of the grid position the symbol is arranged in. Thus the channel impulse response needs to be evaluated for one symbol, the pilot symbol, only, to enable equalization of the received intensities for all symbols or grid positions in the received frame.

To enable a correct analysis of the channel impulse response one has to ensure that no energy transfer from other symbols carrying intensity (i.e. data symbols) takes place to those grid positions, to which energy, i.e. intensity, of the pilot symbol 21 is transferred. Also the intensity of the pilot symbol must not be transferred to grid positions used for data symbols. This is insured by placing guard symbols 25, depicted by circles, not having any intensity around the pilot symbol 21 to form a two-dimensional guard interval 40. The guard interval 40 has the rectangular shape.

The remaining grid spaces of the grid 30 outside the two-dimensional guard interval 40 may be used to place data symbols 27 depicted by crosses. The larger the number of data symbols 27 is that can be placed in the delay Doppler domain grid 30 the larger the bandwidth reserved for transmission of information is.

For the further discussion it is assumed that the pilot symbol 21 is located at the grid position $(I_p, k_p)$. $I_p$ denotes the grid position long the delay dimension 32 whereas $k_p$ denotes the grid position along the Doppler dimension 37.

$I_\tau$ corresponds to the number of grid positions needed due to estimations to ensure that delay effects will neither transfer energy of the pilot symbol 21 to any grid position outside the guard interval 40 nor transfer any energy of the data symbols to guard symbol positions. The two-dimensional guard interval 40 extends along the delay axis from $I_p - I_\tau$ to $I_p + I_\tau$.

$k_v$ represents the number of Doppler intervals 37 or taps that correspond to the maximum expected Doppler frequency shift. The Doppler frequency shift can transfer intensity of the pilot symbol 21 towards higher frequency as well as towards lower frequencies. Also intensity of data symbols 27 can be transferred to higher and lower frequencies. Therefore, the guard interval along the Doppler dimension 32 extends from $k_p - 2k_v$ to $k_p + 2k_v$.

The delay-Doppler domain grid 30 depicts one OFTS frame for the orthogonal time frequency and space (OTFS) modulation scheme. The person skilled in the art will appreciate that the delay-Doppler domain grid 30 as depicted in Fig. 1a will be subjected to two-dimensional (inverse) symplectic finite Fourier transformation prior to transmission. The result of this transformation will be used to actually create the time signal with a Gabor filterbank or also called a Weyl-Heisenberg signaling filterbank and transmitted from the transmitter to the receiver. For these steps the traditional modulation schemes such as orthogonal frequency division multiplex (OFDM) modulation may also be used, when instead of a one dimensional, a two dimensional FFT, and rectangular pulses are used. On reception this process is carried out in reverse.

Fig. 1b depicts the received OTFS frame 10' according to the state of the art. The grid 30 is identical to that of the OTFS transmission frame 10 of Fig. 1a. The same technical features are referred to by the same reference numeral in all figures. In Fig. 1b channel estimation grid spaces 51, into which signal intensity of the pilot symbol might be transferred during transmission due to delay and/or Doppler shifts, are marked each by a square filled with a cross. These constitute a two-dimensional channel estimation area 50 also called guard-pilot space. This two-dimensional channel estimation area 50 comprises the received OTFS samples y[k,l] with $k_p - k_v \leq k \leq k_p + k_v$ and $I_p \leq l \leq I_p + I_\tau$. Thus the two-dimensional channel estimation area 50 extends from $k_p - k_v$ to $k_p + k_v$ along the Doppler dimension and from $I_p$ to $I_p + I_\tau$ along the delay dimension. $k_v$ represents the maximum Doppler shift expected. $I_\tau$ represents the maximum delay expected.

The rest of the grid spaces in the "former" two dimensional guard interval 40 are used for data symbol analysis and are called data-guard grid spaces 52. Thus data grid spaces 53 originally assigned to data symbols as well as the guard-data grid spaces 52 are used for retrieving the data received after the CIR has been evaluated.

In use cases the delays and the Doppler shifts sometimes exceed the maximum delay and/or maximum Doppler shift used to determine the guard interval in the OTFS transmission frame 10 depicted in Fig. 1a. In other situation the quadruple of maximum expected Doppler shift come close to or even exceeds the span covered by the Doppler domain in the OTFS-delay-Doppler frame or twice the maximum expected delay close to or even exceeds the delay span covered by the delay domain in the OTFS-delay-Doppler frame.

In these situation it is beneficiary to extend the guard interval to cover the respective domain completely. It is understood that the guard interval can only be expanded for just one of the two domains, i.e. either the Doppler domain or the delay domain. Otherwise the OTFS delay-Doppler frame would be covered completely by the guard interval.

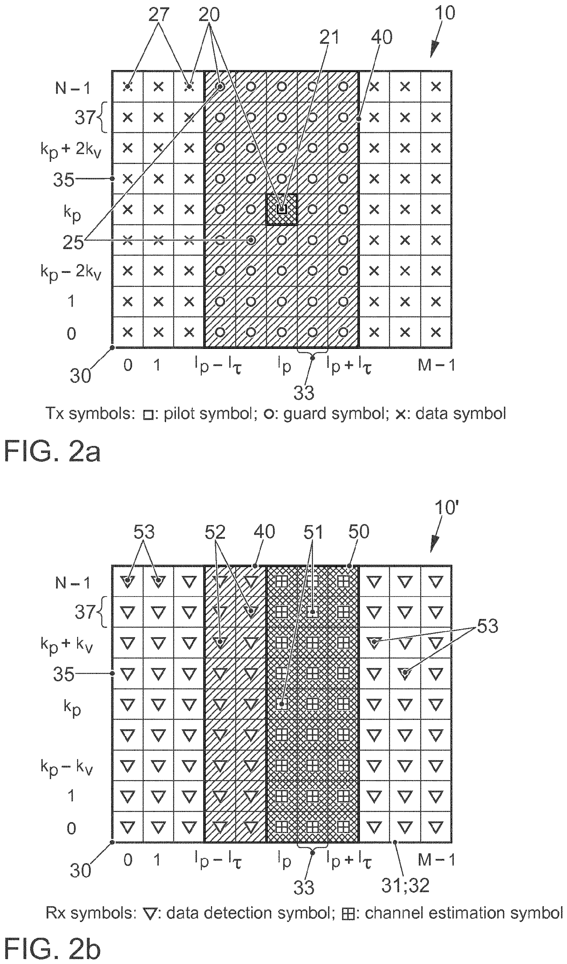

In Fig. 2a and 2b an OTFS transmission frame 10 and the received OTFS frame 10' are depicted, respectively. The guard interval 40 spans the complete Doppler dimension.

It can be seen that all Doppler domain taps k are used for channel estimation. According to the state of the art this would be only those Doppler taps between and including the pilot-minus-maximum-expected-Doppler-shift $k_p - k_v$ and the pilot-plus-maximum-expected-Doppler-shift $k_p + k_v$, i.e. those Doppler taps k with $k_p - k_v \leq k \leq k_p + k_v$.

Here though, all guard interval spaces [k,l] for all Doppler taps k, i.e. all possible Doppler taps k with $0 \leq k \leq N-1$ and the delay taps I between and including the pilot delay tap $I_p$ and the pilot-plus-maximum-expected-delay tap $I_p + I_\tau$, l with $I_p \leq l \leq I_p + I_\tau$ are evaluated for the channel estimation.

In each case where the respective received amplitude y[k,l] is above a certain threshold T, i.e. $y[k,l] \geq T$, a path indicator $b[[k-k_p]_N, [l-I_p]_M]$ and a gain factor $\hat{h}[[k-k_p]_N, [l-I_p]_M]$ are evaluated. The threshold is used to eliminate noise mistaken for "transferred pilot signal amplitude".

In case the threshold is exceeded the path indicator indicating that some pilot intensity is transferred to $[[k-k_p]_N,[l-l_p]_M]$ is set to one, i.e. $b[[k-k_p]_N,[l-l_p]_M] = 1$.

The respective gain factor $\hat{h}[[k-k_p]_N,[l-l_p]_M]$ is set to the received amplitude y[k,l] divided by the pilot signal strength $x_p$,

i.e. ,
$$\hat{h}\left[[k-k_p]_N,[l-l_p]_M\right] = \frac{y[k,l]}{x_p}.$$
$[\cdot]_N$, $[\cdot]_M$ are representing a modulo N and M operation , respectively.

As there are more path indicators and gain factors having non zero values than in the state of the art. The data deduction from the received OTFS-samples y[k,l] can also be improved to reduce the bit error rate (BER).

Instead of just using the gain factors for Doppler taps k between $k_p$-$k_v$ and $k_p$+$k_v$ gain factors for all Doppler taps k, i.e. between 0 and N-1 are used. Thus the evaluation of the transmitted data $x_d[k,l]$ is carried out with the set of equations given by :

$$y[k,l] = \sum_{k'=0}^{N-1} \sum_{l'=0}^{l_\tau} b[k',l']\hat{h}[k',l']x_d[[k-k']_N,[l-l']_M],$$

A so called message passing (MP) algorithm for example described by P.Ravitela et al. in "Low-complexity iterative detection for orthogonal time frequency space modulation", in Proc. IEEE Trans. Wireless Commun., vol. 17, no. 10, pages 6501-6515, October 2018, can be used to deduce the data symbols $x_d$.

The evaluation can be improved even further by also considering white noise v[k,l]:

$$y[k,l] = \sum_{k'=0}^{N-1} \sum_{l'=0}^{l_\tau} b[k',l']\hat{h}[k',l']x_d[[k-k']_N,[l-l']_M] + v[k,l].$$

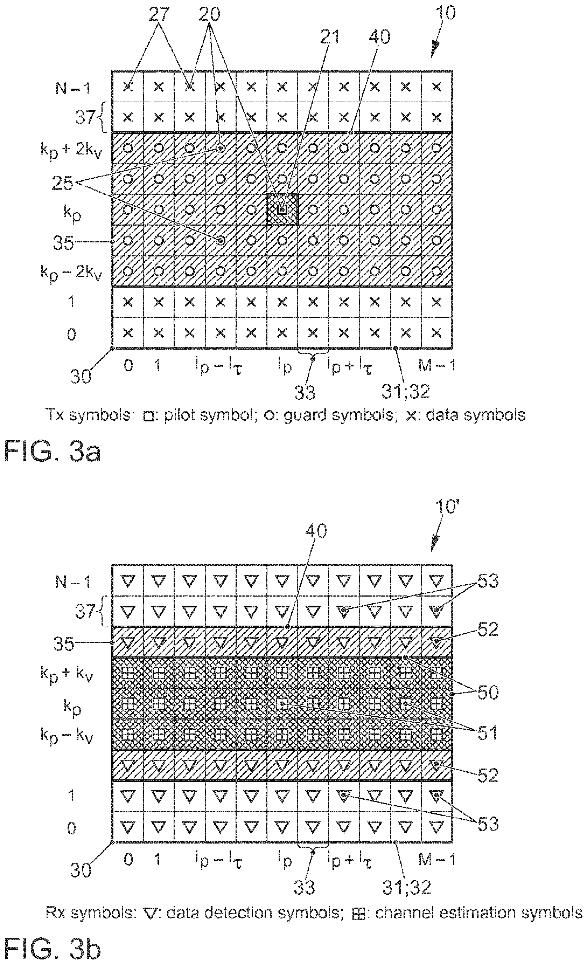

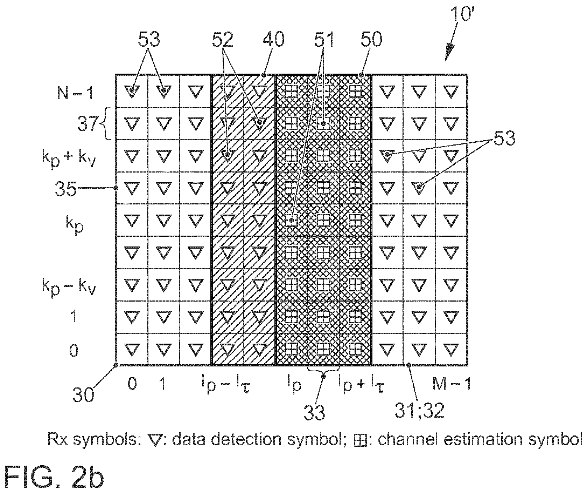

In comparison Fig. 3a and 3b depict an OTFS-transmission frame 10 and a received OTFS-frame 10' for the case where the guard interval spans the complete delay domain.

In this case grid spaces for all delay taps I are evaluated for the respective Doppler taps k between $k_p$-$k_v$ and $k_p$+$k_v$. Thus when the guard interval extends over the complete delay dimension, for all Doppler taps k between and including the pilot-minus-maximum-expected-Doppler-shift $k_p$-$k_v$ and the pilot-plus-maximum-expected-Doppler-shift $k_p$+$k_v$, i.e. k with $k_p$-$k_v \le k \le k_p$+$k_v$, and all delay taps I, $0 \le I \le$ M-1, it is evaluated whether the received sample y[k,l] is greater or equal to a threshold T, i.e. whether y[k,l] $\ge$ T. If this is the case a path indicator $b[[k-k_p]_N,[l-l_p]_M]$ is set to 1, $b[[k-k_p]_N, [l-l_p]_M] = 1$. Further the respective gain factor $\hat{h}[[k-k_p]_N,[l-l_p]_M]$ is set to the received sample amplitude y[k,l] divided by the pilot power, i.e. $x_p$,
$$\hat{h}\left[[k-k_p]_N,[l-l_p]_M\right] = \frac{y[k,l]}{x_p},$$
wherein $[\cdot]_N$ denotes a modulo N operator and $[\cdot]_M$ denotes a modulo M operator.

This improvement in the channel detection may be used to improve on the data deduction by taking into account all gain factors for all delay taps I in the delay domain:

$$y[k,l] = \sum_{k'=k_p-k_v}^{k_p+k_v} \sum_{l'=0}^{M-1} b[k',l']\hat{h}[k',l']x_d[[k-k']_N,[l-l']_M].$$

The evaluation can be improved even further by also considering white noise v[k,l].

$$y[k,l] = \sum_{k'=k_p-k_v}^{k_p+k_v} \sum_{l'=0}^{M-1} b[k',l']\hat{h}[k',l']x_d[[k-k']_N,[l-l']_M] + v[k,l].$$

**Reference numerals**

| | |
|---|---|
| 10 | OTFS transmission frame |
| 10' | received OTFS frame |
| 20 | symbol to be transmitted |
| 21 | pilot symbol |
| 25 | guard symbols |
| 27 | data symbols |
| 30 | delay-Doppler domain grid |
| 31 | delay basis |
| 32 | delay dimension |
| 33 | delay interval/tap |
| 35 | Doppler basis |
| 36 | Doppler dimension |
| 37 | Doppler interval/tap |
| 40 | two-dimensional guard interval |
| 50 | channel estimation area / guard-pilot area |
| 51 | channel estimation grid spaces |
| 52 | data-guard grid spaces |
| 53 | data grid spaces |

**Claims**

1. Method to improve the bit rate error for transmission of OTFS-coded signals that are processed on the basis of integer Doppler shifts, **characterized in that** the guard interval is extends over the complete Doppler dimension or alternatively the guard interval extends over the complete delay dimension of the OTFS-coded frame.

2. Method according to claim 1, further comprising a channel estimation of transmitted OTFS-frames with an embedded pilot taking into account integer Doppler shifts, wherein the channel estimation comprises:

   receiving delay-Doppler domain samples y[k,l] of a received OTFS delay-Doppler frame (10'), associated with a delay-Doppler grid (30), wherein the grid (30) hat N grid spaces associated with a Doppler dimension (36) quantized in $\frac{1}{NT}$ and M grid spaces in the delay dimension (32) quantized in $\frac{1}{M \cdot \Delta f}$, wherein M an N are integers, wherein the delay-Doppler domain samples y[k,l] are derived by a two-dimensional Fourier transformation of time-frequency domain samples Y[n,m] resulting from sampling a time-varying received OFTS coded signal N times with a sampling time T and for M frequency subcarriers with a bandwidth resolution of $\Delta f$;
   determining path gains h[k,l] and path indicators b[k-$k_p$,l-$l_p$] for at least some of the grid positions in the received OTFS delay-Doppler frame (10') from received delay-Doppler domain samples y[k,l] of grid positions in a guard interval surrounding the original pilot grid position [$k_p$,$l_p$], where $k_p$ is the index of the pilot's grid position in the Doppler dimension and $l_p$ is the index of the pilot's grid position in the delay dimension;
   wherein,
   when the guard interval extends over the complete Doppler dimension, for all Doppler Domain taps k, k with $0 \leq k \leq N-1$, and the delay domain taps l between and including the pilot delay tap $l_p$ and the pilot-plus-maximum-expected-delay tap $l_p+l_\tau$, l with $l_p \leq l \leq l_p+l_\tau$, if the received sample y[k,l] is greater or equal to a threshold T, y[k,l] $\geq$ T, a path indicator $b[[k-k_p]_N,[l-l_p]_M]$ is set to 1 as well as the respective gain factor $\hat{h}[[k-k_p]_N,[l-l_p]_M]$ is set to the received sample amplitude y[k,l] divided by the pilot power $x_p$,

   $$\hat{h}\left[\left[k-k_p\right]_N , \left[l-l_p\right]_M\right] = \frac{y[k,l]}{x_p},$$ wherein

   $[\cdot]_N$ denotes a modulo N operator and $[\cdot]_M$ denotes a modulo M operator
   or when
   the guard interval extends over the complete delay dimension, for all Doppler taps k between and including the pilot-minus-maximum-expected-Doppler-shift $k_p-k_v$ and the pilot-plus-maximum-expected-Doppler-shift $k_p+k_v$,

k with $k_p - k_v \leq k \leq k_p + k_v$ and all delay taps l, $0 \leq l \leq M-1$, , if the received sample y[k,l] is greater or equal to a threshold T, $y[k,l] \geq T$, a path indicator $b[[k-k_p]_N, [l-l_p]_M]$ is set to 1 as well as the respective gain factor $\hat{h}[[k-k_p]_N, [l-l_p]_M]$ is set to the received sample amplitude y[k,l] divided by the pilot power $x_p$,

$$\hat{h}\left[[k-k_p]_N, [l-l_p]_M\right] = \frac{y[k,l]}{x_p},$$

wherein $[\cdot]_N$ denotes a modulo N operator and $[\cdot]_M$ denotes a modulo M operator.

3. Method according to claim 2, wherein, when the guard interval extends over the complete Doppler dimension, the transmitted data are deduced from the set of equations taking into account all path indicators b[k,l] and all gain factors h[k,l] for all possible Doppler taps $0 \leq k \leq N-1$ and the delay taps l between and including the pilot delay tap $l_p$ and the pilot-plus-maximum-expected-delay tap $l_p+l_\tau$, l with $l_p \leq l \leq l_p+l_\tau$ :

$$y[k,l] = \sum_{k'=0}^{N-1} \sum_{l'=0}^{l_\tau} b[k',l']\hat{h}[k',l']x_d[[k-k']_N, [l-l']_M],$$

and,

when the guard interval extends over the complete delay dimension, the transmitted data are deduced from the set of equations taking into account all path indicators b[k,l] and all gain factors h[k,l] for all Doppler taps k between and including the pilot-minus-maximum-expected-Doppler-shift $k_p-k_v$ and the pilot-plus-maximum-expected-Doppler-shift $k_p+k_v$, i.e. k with $k_p-k_v \leq k \leq k_p+k_v$, and all delay taps l, i.e. $0 \leq l \leq M-1$,

$$y[k,l] = \sum_{k'=k_p-k_v}^{k_p+k_v} \sum_{l'=0}^{M-1} b[k',l']\hat{h}[k',l']x_d[[k-k']_N, [l-l']_M]$$

4. Method according to claim 3, wherein an additive term v[k,l] representing white noise is taken into account in the respective sets of equations to deduce the transmitted data.

Tx symbols: □: pilot symbol; ○: guard symbol; ×: data symbol

# FIG. 1a

Rx symbols: ▽: data detection symbol; ⊞: channel estimation symbol

# FIG. 1b

Tx symbols: □: pilot symbol; o: guard symbol; ×: data symbol

FIG. 2a

Rx symbols: ▽: data detection symbol; ⊞: channel estimation symbol

FIG. 2b

Tx symbols: □: pilot symbol; ○: guard symbols; ×: data symbols

FIG. 3a

Rx symbols: ▽: data detection symbols; ⊞: channel estimation symbols

FIG. 3b

Rx symbols: ▽: data detection symbol; ⊞: channel estimation symbol

FIG. 2b

Europäisches
Patentamt

European
Patent Office

Office européen
des brevets

# EUROPEAN SEARCH REPORT

Application Number

EP 19 21 0035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAVITEJA P ET AL: "Embedded Pilot-Aided Channel Estimation for OTFS in Delay-Doppler Channels", IEEE TRANSACTIONS ON VEHICULAR TECHNOLOGY, IEEE SERVICE CENTER, PISCATAWAY, NJ, US, vol. 68, no. 5, 1 May 2019 (2019-05-01), pages 4906-4917, XP011725863, ISSN: 0018-9545, DOI: 10.1109/TVT.2019.2906357 [retrieved on 2019-05-28] | 1 | INV.<br>H04L27/26 |
| A | * page 4906 - page 4916; figures 17,18 * ----- | 2-4 | |
| A | SHEN WENQIAN ET AL: "Channel Estimation for Orthogonal Time Frequency Space (OTFS) Massive MIMO", IEEE TRANSACTIONS ON SIGNAL PROCESSING, IEEE SERVICE CENTER, NEW YORK, NY, US, vol. 67, no. 16, 15 August 2019 (2019-08-15), pages 4204-4217, XP011735583, ISSN: 1053-587X, DOI: 10.1109/TSP.2019.2919411 [retrieved on 2019-07-16] * page 4204 - page 4216 * ----- | 1-4 | |

TECHNICAL FIELDS
SEARCHED (IPC)

H04L

The present search report has been drawn up for all claims

| Place of search | Date of completion of the search | Examiner |
|---|---|---|
| Berlin | 8 April 2020 | González Gutiérrez |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P.RAVITELA et al.** Low-complexity iterative detection for orthogonal time frequency space modulation. *Proc. IEEE Trans. Wireless Commun.,* October 2018, vol. 17 (10), 6501-6515